# EUROPÄISCHE PATENTANMELDUNG

(11) **EP 0 800 984 A2**
(43) Veröffentlichungstag der Anmeldung: **15.10.1997**
(21) Anmeldenummer: 97250110.0
(22) Anmeldetag: 09.04.1997
(51) Int. Cl.: B62H 3/00

(54) **Fahrradständer**

(30) Priorität: 11.04.1996 DE 19616131
(71) Anmelder: Krahl, Eberhard, Dipl.-Ing., 13189 Berlin (DE)
(72) Erfinder: Krahl, Eberhard, Dipl.-Ing., 13189 Berlin (DE)
(74) Vertreter: Hannig, Wolf-Dieter, Dipl.-Ing.

(57) **Zusammenfassung**

Die Erfindung betrifft ein Fahrradständer mit einer Diebstahlsicherung, einer aufrecht stehenden am oder im Boden verankerten Tragsäule (1), einem an der Tragsäule (1) angeordneten Anlagearm (2) mit Sicherungsbügel.

Es ist ein einziger kreisbogenförmiger, das Vorder- und Hinterrad (6,7) durchgreifender Schließbügel (13) vorgesehen, der einerends einen Dreharm (17) aufweist und durch eine im Anlagearm (2) befindliche Öffnung (11) um ein in der Tragsäule (1) angeordnetes Drehgelenk (14) des Dreharmes verschwenkbar geführt und der anderenends durch eine weitere Öffnung (12) des Anlagearmes (12) hindurchführbar angeordnet ist, wobei Schließbügel (13) und Öffnungen (11,12) in einer Ebene (SE) liegen und die Drehachse (DA) des Drehgelenkes (14) so zu dieser Ebene angeordnet ist, daß der Dreharm (17) sowohl annähernd in der Drehachse (DA) des Drehgelenkes (14) senkrecht zur Schließbügelebene (SE) verlaüft als auch mit dem Schließbügel (13) verbunden ist. Das Drehgelenk (14) ist durch einen senkrecht zur Drehachsenrichtung wirkenden Arretiermechnaismus (22) ver- und entriegelbar.

## Beschreibung

Die Erfindung betrifft einen Fahrradständer mit einer Diebstahlsicherung, einer aufrecht stehenden am oder im Boden verankerten Tragsäule und einem an der Tragsäule angeordneten Anlagearm mit Sicherungsbügel.

Ein gattungsgemäßer Zweiradständer mit Diebstahlsicherung ist aus der EP 0 628 471 A1 bekannt. Eine im Gebrauchszustand stehende Säule ist am oder im Boden verankerbar und besitzt eine Anlagefläche zum Anlegen des Zweirades. An der Säule sind zwei Bügel gelenkig befestigt, die jeweils mit ihren einen Ende an der Säule angelenkt. Diese Bügel sind zum Zwecke der Zweiradsicherung um einen Gelenkpunkt schwenkbar und durch das Vorderrad bzw. Hinterrad des Zweirades hindurchführbar, um einen geschlossenen Vollbogen zu bilden.

Beide Bügel werden durch ein Schloß in ihrer geschlossenen Position verriegelt, das innerhalb des Bügels angeordnet ist.

Auch andere bekannte Lösungen gehen immer von zwei getrennten Verschlußbügeln aus (US-PS 4 807 453, DE 38 30 334 A1).
Allen diesen bekannte Fahhradständern ist der Nachteil gemeinsam, daß ihr Aufbau durch die doppelte Gelenkausführung immer noch verhältnismäßig kompliziert und ihre Robustheit im Freien, insbesondere bei gewaltsamer Einwirkung nicht ausreichend ist.

Aus der US-PS 3 918 279 und der WO 83/01646 A1 sind außerdem Fahrradständer zur Sicherung gegen Wegnahme bekannt, bei denen die Sicherung mittels Befestigungsbügel bzw. Sicherungsschellen an dem Fahrradrahmen erfolgt.
Bei diesen bekannten Fahrradständern tritt der Nachteil auf, daß keine ausreichende Sicherung der Fahrräder möglich ist, weil die Räder selbst nicht gesichert sind.

In Kenntnis dieses Standes der Technik liegt der Erfindung die Aufgabe zugrunde, einen Fahrradständer der eingangs genannten Art so zu verbessern, daß dieser mit erhöhter Kompaktheit und einfacherem Aufbau die Sicherheit gegen Diebstahl erhöht und zugleich wirtschaftlicher in der Herstellung ist.

Dies wird mit dem Fahrradständer der eingangs genannten Art erfindungsgemäß dadurch gelöst, daß ein einziger kreisbogenförmiger, das Vorderrad und das Hinterrad durchgreifender Schließbügel vorgesehen ist, der einerends einen Dreharm aufweist und durch eine im Anlagearm angeordnete Öffnung um ein in der Tragsäule angeordnetes Drehgelenk des Dreharmes verschwenkbar geführt und der anderenends durch eine weitere Öffnung des Anlagearms hindurchführbar angeordnet ist, wobei Schließbügel und Öffnungen im Anlagearm in einer Ebene liegen und die Drehachse des Drehgelenkes so zu dieser Ebene angeordnet ist, daß der Dreharm sowohl annähernd in der Drehachse des Drehgelenkes senkrecht zur Schließbügelebene verläuft als auch mit dem Schließbügel verbunden ist, und daß das Drehgelenk durch einen senkrecht zur Drehachsenrichtung wirkender Arretiermechanismus ver- und entriegelbar ist.

In einem weiteren Merkmal des erfindungsgemäßen Fahrradständers ist der Schließbügeldurchmesser so gewählt, daß er geringfügig größer ist als der Felgenabstand von Vorder- und Hinterrad, wodurch die seitliche Ausdehnung beim Ausschwenken des Schließbügels gering gehalten und ein optimaler Platzbedarf des erfindungsgemäßen Fahrradständers erreicht wird.
Der Abstand der Öffnungen im Anlagenarm entsprechen dem Schließbügelabstand, wobei die Öffnungsdurchmesser etwas größer sind als der Rohrdurchmesser des Schließbügels.

Dies gewährleistet ein problemloses Hindurchführen des Schließbügels durch die Öffnungen während des Verschwenkens.

In einer weiteren bevorzugten Ausführungsform des erfindungsgemäßen Fahrradständers bildet der Dreharm von seiner Drehachse ausgehend einen mit dem Schließbügelende fest verbundenen Bogen.
Dies hat den Vorteil, daß dieser Bogen in der Schwenkebene liegt und ein Schwenkbereich von annähernd 180° um die Drehachse erzielbar ist, ohne daß der Bügel stört.
Beide Bögen (Schließbogen und Drehbogen) werden getrennt gefertigt und anschließend durch Verschweißen unlösbar verbunden.

In einer weiteren bevorzugten Ausgestaltung des erfindungsgemäßen Fahrradstandes ist der Dreharm und der Schließbügel als ein mindestens in drei Ebenen gebogener gemeinsamer einstückiger Rohrbogen ausgebildet.
Diese Ausführungsform ermöglicht zwar nur ein Verschwenken von annähernd etwa 145° um die Drehachse, spart aber in der Herstellung das Verschweißen ein.

Das Drehgelenk ist nach einer weiteren zweckmäßigen Ausgestaltung des erfindungsgemäßen Fahrradständers im Rohr der Tragsäule angeordnet und besteht aus dem Rohr der Tragsäule, Buchsen, die im Rohr der Tragsäule angeordnet sind und aus dem in die Buchsen eingeschobenen Rohrende des Dreharmes. Der Dreharm kann somit im Rohr der Tragsäule eine entsprechende Drehbewegung ausführen.
Von Vorteil ist, wenn das Drehgelenk oberhalb der Schließbügelebene angeordnet ist, so daß der Rohrbogen des Dreharmes den an der Tragsäule entlang der Rohrachse angeordneten Arretiermechanismus übergreift.

In weiterer bevorzugter Ausgestaltung der Erfindung besteht der Arretiermechanismus aus einem Schloß, das mit seiner Stirnseite so an dem Rohr der Tragsäule befestigt ist, daß mindestens ein Verriegelungselement in eine Öffnung im Rohr der Tragsäule und in eine Öffnung im Rohrenede des Dreharmes sichernd eingreift. Das Verriegelungselement kann vorteilhafterweise aus einem oder mehreren Schließkeilen bestehen.
Das Auffinden der Entriegelungs- und der Schließstellung wird durch zwei am Ende des Anlagearms angeordnete Kunststoffanschläge gewährleistet.

In beonders vorteilhafter Ausgestaltung der Erfindung besteht der Arretiermechanismus aus zwei Befestigungsösen, von denen die eine am Ende des Schließbügel und die andere am Anlagearm angeordnet ist, so daß eine einfache Sicherung mit einer handelsüblichen Fahrradkette möglich ist.

Genauso gehört es zu der Erfindung, wenn das Drehgelenk als eine das Rohr der Tragsäule drehbar umschließende Hülse ausgebildet ist, an welcher der Dreharm unlösbar befestigt ist.

Das Drehgelenk ist dann unterhalb der Schließbügelebene angeordnet. Um ein geräuschloses Drehen des Dreharmes im Gelenk zu erreichen, ist die Hülse auf ihrer Innenseite kunststoffbeschichtet.

Für diesen Fall der Anordnung des Drehgelenkes ist der Arretiermechanismus mit seiner Stirnseite an der Hülse so befestigt, daß mindestens ein Verriegelungselement in eine Öffnung in der Hülse und in eine Öffnung im Rohr der Tragsäule sichernd eingreift.

Das Schloß selbst ist vorzugsweise ein durch Münzen betätigbares Schloß. Natürlich kann auch ein chipbetätigbares Schloß dieselbe Funktion erfüllen, dann kann sogar der Münzbehälter entfallen.

Die Tragsäule besteht mit Vorteil aus verzinktem Rohr, das direkt in einem Betonfundament eingegossen bzw. verankert sein kann. Ebenso ist es möglich, die Tragsäule mittels einer Bodenplatte am Betonboden durch Schrauben zu befestigen.

Die durch die Erfindung erreichte hohe Wirtschaftlichkeit ist dadurch begründet, daß mit wenigen Bauteilen eine außerordentlich hohe Kompaktheit und Robustheit bei gleichzeitig verbesserter Sicherheit des Fahrradständers gewährleistet ist und außerdem eine hohe Wirtschaftlichkeit erreicht wird.

Weitere Vorteile und Einzelheiten ergeben sich aus der nachfolgenden Beschreibung eines bevorzugten Ausführungsbeispieles unter Bezugnahme auf die beigefügten Zeichnungen.

Es zeigen im einzelnen:
- Fig. 1: eine Draufsicht des erfindungsgemäßen Fahrradständers,
- Fig. 2: eine Seitenansicht des erfindugsgemäßen Fahrradständers,
- Fig. 3: einen Schnitt durch das im Rohr der Tragsäule angeordnete Drehgelenk,

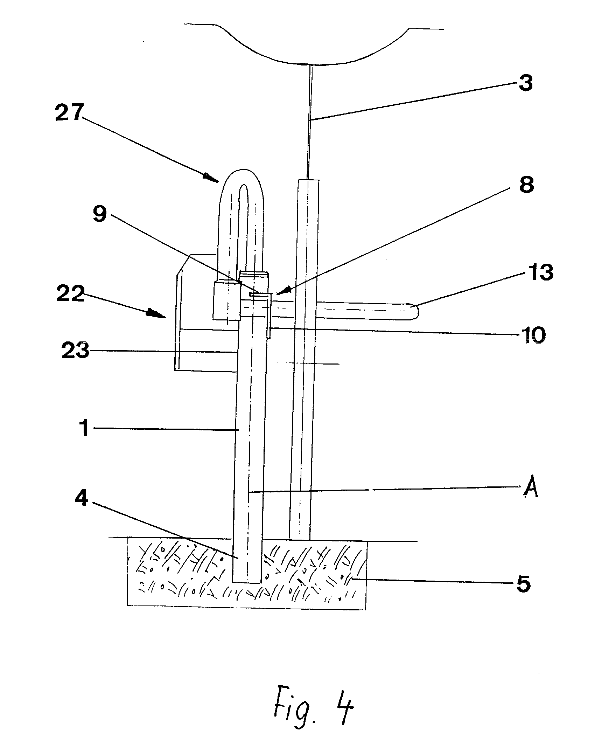

- Fig. 4: eine Vorderansicht mit abgestelltem Fahrrad
- Fig. 5: einen gemeinamen Rohrbogen als Schließbügel und Dreharm und

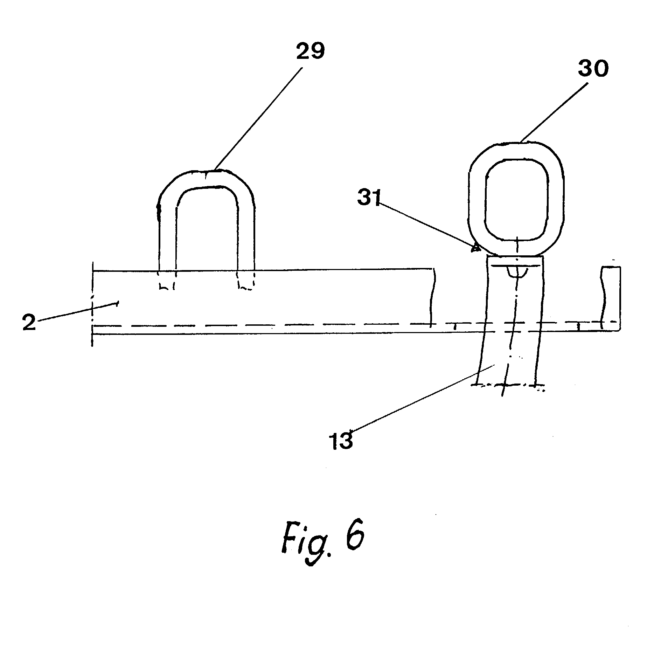

- Fig. 6: die Anordnung der Befestigungsösen am Schließbügel und Anlagearm.

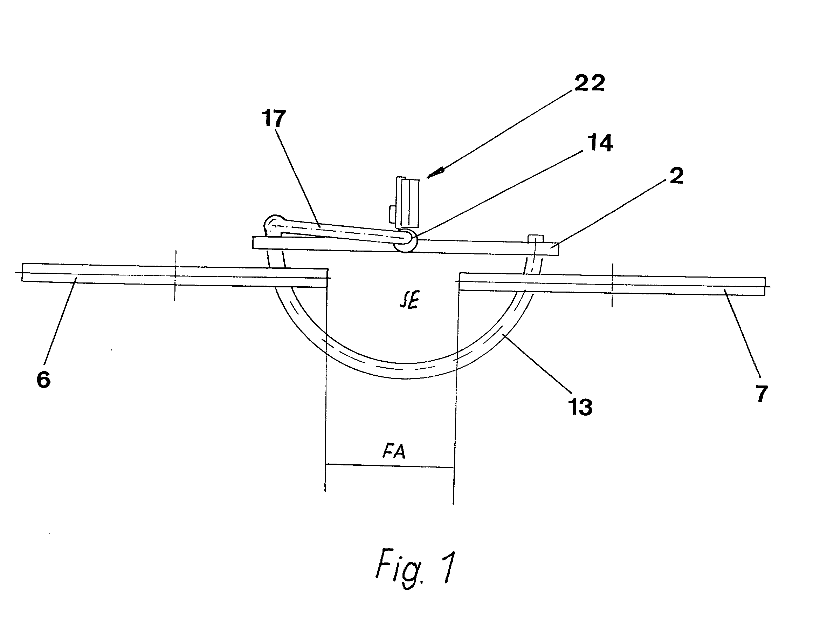

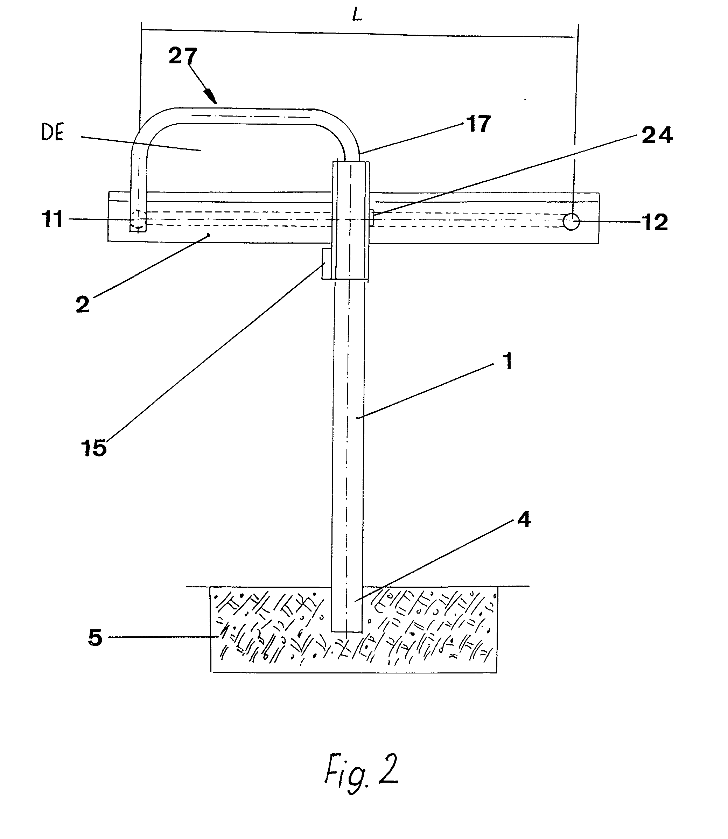

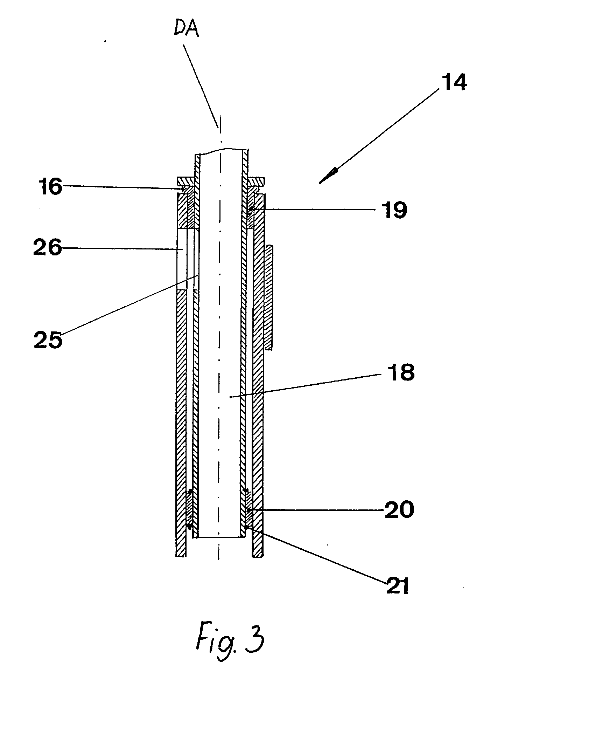

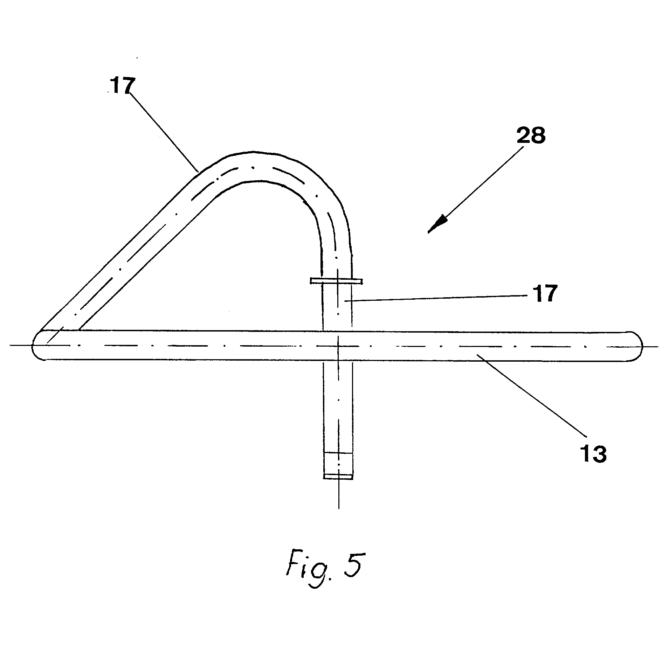

Nach Fig. 1 ist an einer Tragsäule **1** aus verzinktem Stahlrohr ein Anlagearm **2** für das Abstellen eines Fahrrades **3** befestigt. Die Tragsäule **1** ist mit ihrem Fuß **4** in einem Betonfundament **5** verankert und hat eine Höhe, die etwa der halben Fahrradhöhe entspricht, so daß das Vorderrad **6** und das Hinterrad **7** des Fahrrades **3** am Anlagearm **2** zur Anlage kommen.
Der Anlagearm **2** besteht aus einem verzinktem Winkelprofil **8** und wird mit der Tragsäule **1** so verschweißt, daß die Tragsäule **1** den Anlagearm **2** in annähernd zwei gleich lange Teile aufteilt.
Das Winkelprofil **8** des Anlagearms **2** hat einen kurzen Schenkel **9** und einen etwas längeren Schenkel **10**. Der kurze Schenkel **9** verläuft senkrecht zur Rohrachse **A** und ist dort, wo die Tragsäule **1** aufgenommen werden soll, soweit ausgeklinkt, daß der längere Schenkel **10** das Rohr der Tragsäule **1** berührt.
Im längeren Schenkel **10** sind im Abstand **L**, der etwas größer als der Felgenabstand **FA** gewählt ist, zwei Öffnungen bzw. Löcher **11** und **12** eingearbeitet, durch die ein halbkreisförmiger Schließbügel **13** um ein Drehgelenk **14** verschwenkbar ist.
Schließbügel **13** und Dreharm **17** können getrennt oder einstückig ausgeführt sein. Fig.2 zeigt die getrennte Ausführung von Schließbügel **13** und Dreharm **17**. Der Schließbügel **13** besitzt einen aus einem Rohrbogen **27** bestehenden Dreharm **17**, dessen Rohrende **18** Teil des Drehgelenkes **14** ist und in der Drehachse **DA** des Drehgelenkes **14** angeordnet ist.
Bei der einstückigen Ausführung (siehe Fig. 5) ist der Schließbügel **13** und der Dreharm **17** aus einem gemeinsamen Rohrbogen **28** gefertigt, das in mehreren Ebenen abgebogen ist, so daß der Dreharm **17** in den Schließbügel **13** übergeht.
Im Rohr der Tragsäule **1** befinden sich Buchsen **19** und **20**, in die das Rohrende **18** des Dreharmes **17** eingeschoben sind, so daß der Dreharm **17** im Rohr der Tragssäule **1** drehbar belagert ist (Fig. 3). Die untere Buchse **20** ist durch Sprengringe **21**, die obere Buchse **19** durch einen Flansch **16** gegen axiales Verschieben gesichert. Ebenso kann die Sicherung der Buchsen auch durch zwei Scheiben erfolgen, die durch Splinte gegen ein Verschieben gesichert werden.

Der andere Teil des bogenförmigen Dreharmes **17** ist mit dem Schließbügel **13** unlösbar, beispielsweise durch Schweißen, verbunden. Dreharmebene **DE** und Schließbügelebene **SE** stehen rechtwinklig zueinander, wobei die Schließbügelebene **SE** ihrerseits durch die Öffnungen **11** und **12** des Anlagearmes **2** verläuft.

Der Arretiermechanismus **22** ist mit seiner Stirnseite **23** am Rohr der Tragsäule **1** unlösbar befestigt. Mit einem Schloß **24** wird ein nicht dargestellter Verriegelungsbolzen betätigt, der in die Öffnung **25** des Rohres der Tragsäule **1** und in die Öffnung **26** im Rohrende **18** des Dreharmes **17** eingreift.
Hierdurch ist der Dreharm **17** gegen Verdrehen gesichert.

Das Schloß **24** kann als Münzschloß ausgebildet sein, aber auch mit einer Chipkarte betätigt werden.

Nach Entriegeln des Dreharmes **17** durch Einwurf einer Münze oder Einschieben einer Chipkarte ist der Schließbügel **13** um annähernd 180° in die Offenstellung verschwenkbar, so daß der Anlagearm **2** für das Abstellen des Fahrrades freigegeben ist. Nach Abstellen des Fahrrades wird der Schließbügel **13** durch das Vorderrad **6** und das Hinterrad **7** hindurchbewegt, in dem der Dreharm **17** aus seiner Offenstellung in seine Schließstellung verschwenkt wird. Der Schließbügel **13** durchgreift dann sowohl Vorderrad **6** als auch Hinterrad **7**.

### Aufstellung der verwendeten Bezugszeichen

- Tragsäule: 1
- Anlagearm: 2
- Fahrrad: 3
- Fuß der Tragsäule 1: 4
- Betonfundanemt: 5
- Vorderrad: 6
- Hinterrad: 7
- Winkelprofil: 8
- kurzer Schenkel des Winkelprofils 8: 9
- langer Schenkel des Winkelprofils 8: 10
- Löcher im Anlagearm 2: 11, 12
- Schließbügel: 13
- Drehgelenk: 14
- Münzbehälter: 15
- Flansch: 16
- Dreharm: 17
- Rohrende des Dreharmes 17: 18
- Buchsen: 19, 20
- Sprengringe: 21
- Arretiermechanismus: 22
- Stirnseite: 23
- Schloß: 24
- Öffnungen: 25, 26
- Rohrbogen: 27
- einstückiger Rohrbogen: 28
- Befestigungsösen: 29, 30
- Schließbügelende: 31
- Rohrachse: A
- Abstand der Löcher 11, 12: L
- Felgenabstand: FA
- Drehachse des Drehgelenkes: DA
- Dreharmebene: DE
- Schließbügelebene: SE

## Patentansprüche

1. Fahrradständer mit einer Diebstahlsicherung, einer aufrecht stehenden am oder im Boden verankerten Tragsäule und einem an der Tragsäule angeordneten Anlagearm mit Sicherungsbügel,
**dadurch gekennzeichnet,**
daß ein einziger kreisbogenförmiger, das Vorder- und Hinterrad **(6;7)** durchgreifender Schließbügel **(13)** vorgesehen ist, der einerends einen Dreharm **(17)** aufweist und durch eine im Anlagearm **(2)** befindliche Öffnung **(11)** um ein in der Tragsäule **(1)** angeordnetes Drehgelenk **(14)** des Dreharmes verschwenkbar geführt und der anderenends durch eine weitere Öffnung **(12)** des Anlagearms **(12)** hindurchführbar angeordnet ist, wobei Schließbügel **(13)** und Öffnungen **(11;12)** in einer Ebene **(SE)** liegen und die Drehachse **(DA)** des Drehgelenkes **(14)** so zu dieser Ebene angeordnet ist, daß der Dreharm **(17)** sowohl annähernd in der Drehachse **(DA)** des Drehgelenkes **(14)** senkrecht zur Schließbügelebene **(SE)** verläuft als auch mit dem Schließbügel **(13)** verbunden ist, und daß das Drehgelenk **(14)** durch einen senkrecht zur Drehachsenrichtung wirkenden Arretiermechanismus **(22)** verund entriegelbar ist.

2. Fahrradständer nach Anspruch 1,
**dadurch gekennzeichnet,** daß der Schließbügeldurchmesser etwas größer als der Felgenabstand **(FA)** von Vorder- und Hinterrad **(6;7)** ist.

3. Fahrradständer nach Anspruch 1,
**dadurch gekennzeichnet,** daß der Abstand **(L)** der Öffnungen **(11;12)** im Anlagearm **(2)** dem Schließbügeldurchmesser entspricht.

4. Fahrradständer nach Anspruch 1 bis 3,
**dadurch gekennzeichnet,**
daß der Dreharm **(17)** von seiner Drehachse **(DA)** ausgehend einen mit dem Schließbügelende fest verbundenen Bogen **(27)** bildet, der den an der Tragsäule **(1)** befestigten Arretiermechanismus **(22)** übergreift.

5. Fahrradständer nach Anspruch 4,
**dadurch gekennzeichnet,**
daß der Schließbügel **(13)** bis annähernd 180° verschwenkbar ist.

6. Fahrradständer nach Anspruch 1 bis 3,
**dadurch gekennzeichnet,**
daß der Schließbügel **(13)** und der Dreharm **(17)** als ein in mindestens in drei Ebenen gebogener gemeinsamer einstückiger Rohrbogen **(28)** ausgebildet ist.

7. Fahrradständer nach Anspruch 6,
**dadurch gekennzeichnet,**
daß der gemeinsame Rohrbogen **(28)** bis um etwa 145° verschwenkbar ist.

8. Fahrradständer nach Anspruch 1 bis 7,
**dadurch gekennzeichnet,**
daß das Drehgelenk **(14)** im Rohr der Tragsäule **(1)** angeordnet ist und aus in das Rohr eingesetzten Buchsen **(19;20)** sowie dem in diese Buchsen **(19;20)** eingeschobenen Rohrende **(18)** des Dreharmes **(17)** besteht.

9. Fahrradständer nach Anspruch 1 bis 8,
**dadurch gekennzeichnet,**
daß das Drehgelenk **(14)** oberhalb der Schließbügelebene **(SE)** in der Tragsäule **(1)** angeordnet ist.

10. Fahrradständer nach Anspruch 1 bis 9,
**dadurch gekennzeichnet,**
daß der Arretiermechanismus **(22)** aus einem Schloß **(24)** besteht, das mit seiner Stirnseite **(23)** so an dem Rohr der Tragsäule **(1)** befestigt ist, daß mindestens ein Verriegelungselement in eine Öffnung **(25)** im Rohr der Tragsäule **(1)** und in eine Öffnung **(26)** im Rohrende **(18)** des Dreharmes **(17)** sichernd eingreift.

11. Fahrradständer nach Anspruch 10,
**dadurch gekennzeichnet,**
daß das Verriegelungselement mindestens ein Schließkeil ist.

12. Fahrradständer nach Anspruch 1 bis 9,
**dadurch gekennzeichnet,**
daß der Arretiermechanismus **(22)** aus zwei Befestigungsösen **(29;30)** für eine Fahrradkette besteht, von denen die eine am Schließbügelende **(31)** und die andere am Anlagearm **(2)** angeordnet ist.

13. Fahrradständer nach Anspruch 12,
**dadurch gekennzeichnet**, daß die Befestigungsösen **(29;30)** aus Edelstahl bestehen

14. Fahrradständer nach Anspruch 1 bis 7,
**dadurch gekennzeichnet,**
daß das Drehgelenk **(14)** als eine das Rohr der Tragsäule **(1)** umschließende drehbare Hülse ausgebildet ist, an welcher der Dreharm **(17)** unlösbar befestigt ist.

15. Fahrradständer nach Anspruch 14
**dadurch gekennzeichnet,**
daß das Drehgelenk **(14)** unterhalb der Schließbügelebene **(SE)** angeordnet ist.

16. Fahrradständer nach Anspruch 14 und 15,
**dadurch gekennzeichnet**,
daß die Hülse auf ihrer Innenseite eine Kunststoffbeschichtung aufweist.

17. Fahrradständer nach Anspruch 14 bis 16,
**dadurch gekennzeichnet**,
daß der Arretiermechanismus **(22)** aus einem Schloß **(24)** besteht, das mit seiner Stirnseite **(23)** so an der Hülse befestigt ist, daß mindestens ein Verriegelungselement in eine Öffnung in der Hülse und in eine Öffnung im Rohr der Tragsäule sichernd eingreift.

18. Fahrradständer nach Anspruch 10, 11 und 14 bis 17,
**dadurch gekennzeichnet**,
daß das Schloß **(24)** ein Münzschloß oder ein chipbetätigtes Schloß ist.

19. Fahrradständer nach Anspruch 1 bis 18,
**dadurch gekennzeichnet**,
daß der Arretiermechanismus **(22)** auf der der Anlageseite des Fahrrads abgewandten Seite des Anlagearmes **(2)** angeordnet ist und gegen die Drehbewegung des Dreharmes sichert.

20. Fahrradständer nach Anspruch 1 ,
**dadurch gekennzeichnet**,
daß die Tragsäule **(1)** im Boden einbetoniert oder mit einem Betonfundament verschraubt ist.
